# EUROPEAN PATENT APPLICATION

(11) **EP 4 850 955 A1**
(43) Date of publication of application: **09.12.2026**
(21) Application number: 24921725.8
(22) Date of filing: 10.12.2024
(51) Int. Cl.: B60K 11/08, B62D 37/02

(54) **ACTIVE GRILLE SHUTTER ASSEMBLY AND VEHICLE**

(30) Priority: 02.02.2024 CN 202410155142
(71) Applicant: Wuhan Lotus Cars Co., Ltd., Wuhan, Hubei 430056 (CN)
(72) Inventor: WANG, You, Wuhan, Hubei 430056 (CN); LI, Bo, Wuhan, Hubei 430056 (CN); WU, Huanhui, Wuhan, Hubei 430056 (CN)
(74) Representative: Barker Brettell LLP
(86) International application number: PCT/CN2024/138281
(87) International publication number: WO 2025/161703

(57) **Abstract**

An active air intake grille assembly (10) applied to a vehicle (100), where the vehicle (100) includes a vehicle body (20) and a grille opening (21) provided on the vehicle body (20). The active air intake grille assembly (10) includes a first structural member (11) and a controller (13). The first structural member (11) is movably connected to the vehicle body (20) in a vertical direction, the controller (13) is connected to the first structural member (11) and configured to control the first structural member (11) to move in the vertical direction relative to the vehicle body (20). The first structural member (11) includes a first state and a second state. The first structural member (11) is configured to block airflow from entering into the vehicle body (20) through the grille opening (21) when it is in the first state; and is further configured to block the airflow from passing through a vehicle body bottom (22) when it is in the second state.

## Description

### CROSS-REFERENCE TO RELATED APPLICATIONS

The present application claims priority to Chinese Patent Application No. 202410155142.9, filed with the China National Intellectual Property Administration on February 02, 2024 and entitled "ACTIVE AIR INTAKE GRILLE ASSEMBLY AND VEHICLE", which is hereby incorporated by reference in its entirety.

### TECHNICAL FIELD

The present invention relates to the technical field of vehicles, and in particular, to an active air intake grille assembly and a vehicle.

### BACKGROUND

An active air intake grille and an active air dam are both important components of an electric motor vehicle to regulate ambient airflow. The active air intake grille assembly can be opened when a vehicle engine needs to be cooled, so as to improve the cooling speed of the engine. The active air intake grille assembly can be closed when the engine does not need to be cooled, so that the engine can be rapidly heated, so as to improve engine efficiency, reduce exhaust emissions, and lower wind resistance, thereby achieving the purpose of saving fuel and reducing consumption. The active air dam can be used to control the flow of air relative to the vehicle in terms of speed, so as to improve the dynamic performance and operability of the vehicle, increase the damping coefficient of the vehicle body, or improve the stability of the vehicle by generation of a downward force thereon.

Generally, the active air intake grille assembly and the active air dam are both provided at a front end of the vehicle, where both the active air intake grille assembly and the active air dam adopt a flipping movement, and a flipping angle of each of the active air intake grille assembly and the active air dam is adjusted through of a separate control system, so as to regulate the ambient airflow.

However, the space at the front end of the vehicle is limited, and the independent control systems of the active air intake grille assembly and the active air dam will occupy a large space, resulting in a problem of difficulty in arranging the active grille assembly and the active air dam.

### SUMMARY

The embodiments of the present application provide an active air intake grille assembly and a vehicle, so as to solve the problem of difficulty in arranging the active grille assembly and the active air dam in existing vehicles.

In a first aspect, the present application provides an active air intake grille assembly applied to a vehicle, where the vehicle includes a vehicle body and a grille opening provided on the vehicle body. The active air intake grille assembly includes a first structural member and a controller, where the first structural member is movably connected to the vehicle body in a vertical direction, the controller is connected to the first structural member, and the controller is configured to control the first structural member to move relative to the vehicle body in the vertical direction. The first structural member includes a first state and a second state. The first structural member is configured to block airflow from entering into the vehicle body through the grille opening when it is in the first state, and the first structural member is further configured to block the airflow from passing through a bottom of the vehicle body when it is in the second state.

According to the active air intake grille assembly in the embodiments of the present application, the first structural member is set to move relative to the vehicle body in the vertical direction, that is, the first structural member can move up and down relative to the vehicle body; and when the first structural member is in the first state, it can be configured to block the airflow from entering into the vehicle body through the grille opening, so that the partial structure of the first structural member in the first state can function as an air intake grille, blocking the airflow from entering into the interior of the vehicle body. This can achieve the heat preservation effect of the engine, and then heat the engine rapidly, so as to improve engine efficiency, reduce exhaust emissions and lower wind resistance, thereby achieving the purpose of saving fuel and reducing consumption.

When the first structural member is in the second state, it can be configured to block the airflow from passing through a bottom of the vehicle body, so that the partial structure of the first structural member in the second state can serve as an air dam, so as to improve the dynamic performance and operability of the vehicle, increase the damping coefficient of the vehicle body, or improve the stability of the vehicle by generation of a downward force thereon.

That is to say, the first structural member can be used as not only an air inlet grille but also an air dam, and is easy to control. Therefore, the active air intake grille assembly in the embodiments of the present application has a simple structure, a small volume and a low cost, which can reduce installation space and facilitate assembly.

In one possible implementation, when the first structural member is in the first state, at least part of a structure of the first structural member is located within the grille opening and configured to block at least part of the grille opening. When the first structural member is in the second state, at least part of the structure of the first structural member extends beyond the bottom of the vehicle body.

When the first structural member is in the first state, at least part of the structure of the first structural member is located within the grille opening, so that such part of the first structural member located within the grille opening can block at least part of the grille opening, thereby enabling the first structural member to achieve the function of blocking the airflow from entering into the vehicle body through the grille opening. When the first structural member is in the second state, at least part of the structure of the first structural member extends beyond the bottom of the vehicle body, so that the part of the first structural member extending beyond the bottom of the vehicle body can block the airflow at the bottom of the vehicle body, that is, the airflow is blocked from entering into the bottom of the vehicle body, thereby allowing that an air pressure at the bottom of the vehicle body is less than that outside the vehicle body, a downforce of the vehicle body is greater, and the stability of the vehicle body is improved.

In one possible implementation, a monitoring apparatus is further included, where the monitoring apparatus is electrically connected to the controller, and is configured to collect driving parameter information of the vehicle, and the controller is configured to control the first structural member to move relative to the vehicle body in the vertical direction based on the driving parameter information.

By providing the monitoring apparatus, the controller can control the movement of the first structural member by the driving parameter information of the vehicle collected by the monitoring apparatus. That is to say, the controller may control the movement direction of the first structural member by the driving parameter information of the vehicle collected by the monitoring apparatus. For example, when the first structural member is required to implement the function of the air intake grille, the first structural member may be controlled to move upward to block the grille opening. When the first structural member is required to realize the function of the air dam, the first structural member can be controlled to move downward, so that part of the structure of the first structural member extends beyond the bottom of the vehicle body, thereby blocking the airflow from entering into the bottom of the vehicle body.

In one possible implementation, a driving assembly is further included, where the first structural member is connected to the driving assembly. The driving assembly is electrically connected to the controller, and the controller is configured to control the driving assembly to drive the first structural member to move relative to the vehicle body in the vertical direction.

By providing the driving assembly, a driving force is provided for the movement of the first structural member, so as to drive the first structural member to move in the vertical direction. By electrically connecting the controller to the driving assembly, the driving assembly can be further controlled by the controller.

In one possible implementation, the driving assembly includes a guide rail and an actuator, where the first structural member is movably connected to the guide rail, and the actuator is configured to drive the first structural member to move along the guide rail in the vertical direction.

By providing the driving assembly with the guide rail and the actuator, the first structural member can be movably connected to the guide rail. In this way, when the first structural member moves in the vertical direction, it can move along the guide rail, which can prevent the first structural member from shaking when it moves in the vertical direction, thereby improving the stability of the first structural member during movement. By providing the actuator, it is possible to provide a driving force for the movement of the first structural member.

In one possible implementation, the actuator is an electric motor.

In one possible implementation, a second structural member is further included, where in the vertical direction, the first structural member and the second structural member are provided opposite to each other on both sides of the grille opening, the first structural member is located between the grille opening and the bottom of the vehicle body, and the second structural member is located between the grille opening and a top of the vehicle body.

By proving the second structural member and arranging the first structural member and the second structural member opposite to each other on both sides of the grille opening, the opening or closing of the grille opening can be controlled by the first structural member and the second structural member jointly. Compared to that the opening or closing of the grille opening is controlled only by the first structural member, the flexibility of controlling the grille opening can be improved.

In one possible implementation, the second structural member is connected to the controller, and the controller is configured to control the second structural member to move relative to the vehicle body in the vertical direction.

By connecting the second structural member to the controller, the controller may control the second structural member to move in the vertical direction.

In one possible implementation, the second structural member includes a third state and a fourth state. When the second structural member is in the third state, at least part of a structure of the second structural member is located within the grille opening and is configured to block at least part of the grille opening, so as to block an airflow from entering into the vehicle body through the grille opening; and when the second structural member is in the fourth state, the second structural member is located outside the grille opening.

When the second structural member is in the third state, at least part of the second structural member is located within the grille opening, so that the part of the second structural member located within the grille opening may can be used to block the airflow from entering into the vehicle body through the grille opening, enabling the partial structure of the second structural member in the third state to serve as an air intake grille, which can block the airflow from entering into the interior of the vehicle body. This can achieve the heat preservation effect of the engine, and then heat the engine rapidly, so as to improve engine efficiency, reduce exhaust emission and lower wind resistance, thereby achieving the purpose of saving fuel and reducing consumption. When the second structural member is in the fourth state, the second structural member is provided outside the grille opening, so that the grille opening can be opened, which facilitates the heat dissipation of the engine of the vehicle.

In one possible implementation, a first driving assembly and a second driving assembly are further included. The first structural member is connected to the first driving assembly, and the second structural member is connected to the second driving assembly. Both the first driving assembly and the second driving assembly are electrically connected to the controller, and the controller is configured to control the first driving assembly to drive the first structural member to move in the vertical direction relative to the vehicle body; and the controller is further configured to control the second driving assembly to drive the second structural member to move in the vertical direction relative to the vehicle body.

By providing the first driving assembly and the second driving assembly, a driving force is provided for the movement of the first structural member and the second structural member, so as to drive the first structural member and the second structural member to move in the vertical direction. By electrically connecting the controller with both the first driver and the second driver assembly, the first driver and the second driver assembly can be controlled by the controller.

In one possible implementation, the first driving assembly includes a first guide rail and a first actuator, and the second driving assembly includes a second guide rail and a second actuator. The first structural member is movably connected to the first guide rail, and the first actuator is configured to drive the first structural member to move along the first guide rail in the vertical direction; and the second structural member is movably connected to the second guide rail, and the second actuator is configured to drive the second structural member to move along the second guide rail in the vertical direction.

By providing the first driving assembly with the first guide rail and the first actuator, the first structural member can be movably connected to the first guide rail, so that when the first structural member moves in the vertical direction, it can move along the first guide rail, which can prevent the first structural member from shaking when it moves in the vertical direction, thereby improving the stability of the first structural member during movement. By providing the first actuator, it is possible to provide a driving force for the movement of the first structural member.

By providing the second driving assembly with the second guide rail and the second actuator, the second structural member can be movably connected to the second guide rail, so that when the second structural member moves in the vertical direction, the second structural member can move along the second guide rail, which can prevent the second structural member from shaking when it moves in the vertical direction, thereby improving the stability of the second structural member during movement. By providing the second actuator, it is possible to provide a driving force for the movement of the second structural member.

In one possible implementation, both the first actuator and the second actuator are electric motors.

In a second aspect, the present application provides a vehicle, including a vehicle body and the active air intake grille assembly according to any one implementation in the first aspect.

In the embodiments of the present application, the vehicle is provided with the active air intake grille assembly in the first aspect. Since the active air intake grille assembly in the first aspect has a simple structure, a small volume and a low cost, it can reduce installation space and facilitate assembly, thereby reducing the assembly difficulty of the active air intake grille and reducing the cost of the vehicle.

In one possible implementation, the vehicle body includes a grille opening and an engine compartment, and the grille opening is in communication with the engine compartment; and the active air intake grille assembly includes a first structural member located between the grille opening and the engine compartment.

By providing the first structural member between the grille opening and the engine compartment, the first structural member can be provided inside the vehicle body, thereby improving the aesthetic appearance of the vehicle body and improving the user experience.

### BRIEF DESCRIPTION OF THE DRAWINGS

In order to describe the technical solutions in the embodiments of the present application or in the prior art more clearly, the accompanying drawings required for describing the embodiments or the prior art will be briefly introduced below. Obviously, the accompanying drawings described below are some embodiments of the present invention, and for those skilled in the art, other drawings can be obtained based on these drawings without creative efforts.
FIG. 1 is a schematic diagram of a partial structure of a vehicle according to an embodiment of the present application.
FIG. 2 is a schematic diagram of a cross-sectional structure of a vehicle according to an embodiment of the present application.
FIG. 3 is a schematic structural diagram of an active air intake grille assembly according to an embodiment of the present application.
FIG. 4 is a schematic structural diagram of an active air intake grille assembly according to an embodiment of the present application.
FIG. 5 is a schematic structural diagram of an active air intake grille assembly according to an embodiment of the present application.
FIG. 6 is a schematic structural diagram of an active air intake grille assembly according to an embodiment of the present application.
FIG. 7 is a schematic structural diagram of an active air intake grille assembly according to an embodiment of the present application.
FIG. 8 is a schematic structural diagram of an active air intake grille assembly according to an embodiment of the present application.
FIG. 9 is a schematic structural diagram of an active air intake grille assembly according to an embodiment of the present application.
FIG. 10 is a schematic structural diagram of an active air intake grille assembly according to an embodiment of the present application.
FIG. 11 is a schematic structural diagram of an active air intake grille assembly according to an embodiment of the present application.

Description of Reference Numerals:
100-vehicle;
10-active air intake grille assembly;
11-first structural member; 111-air dam;
12-second structural member;
13-controller;
14-monitoring apparatus;
15-driving assembly; 151-actuator; 152-guide rail;
16-first driving assembly; 161-first actuator; 162-first guide rail;
17-second driving assembly; 171-second actuator; 172-second guide rail;
20-vehicle body;
21-grille opening;
22- vehicle body bottom;
23-engine hood;
24-engine compartment;
30-wheel.

### DESCRIPTION OF EMBODIMENTS

In order to make the objectives, technical solutions, and advantages of the embodiments in the present invention clearer, the technical solutions in the embodiments of the present invention will be clearly and completely described below with reference to the accompanying drawings in the embodiments of the present invention. Obviously, the embodiments to be described are merely part of rather than all of the embodiments of the present invention. All other embodiments obtained by those ordinary skilled in the art based on the embodiments of the present invention without creative efforts shall belong to the protection scope of the present invention.

A traditional active air intake grille and an active air dam are usually used as two separate components. The active air intake grille generally adopts a flap-type movement, requiring a set of electric motor to control the movement thereof, and a grille blade still exists after being opened. In this way, the utilization rate of grille opening area is reduced, and the heat dissipation efficiency of the vehicle engine is reduced. The active air dam generally adopts a flipping movement, and a curved-surface air dam needs to be split into three sections, and each section needs a set of electric motors to achieve the movement thereof, requiring a large space.

However, the space at the front end of the vehicle is limited, which makes it difficult to arrange the active air intake grille and the active air dam.

In order to solve the above-mentioned technical problem, the present application provides an active air intake grille assembly and a vehicle. The active air intake grille assembly is provided with a first structural member which can be set to move in a vertical direction. When the first structural member is in a first state, the first structural member can serve as the air intake grille, while when the first structural member is in a second state, the first structural member can serve as the active air dam, so as to simplify the structure of the active air intake grille assembly and reduce the space occupation, thereby facilitating layout.

The active air intake grille assembly and the vehicle provided in the embodiments of the present application will be described in detail below with reference to the accompanying drawings.

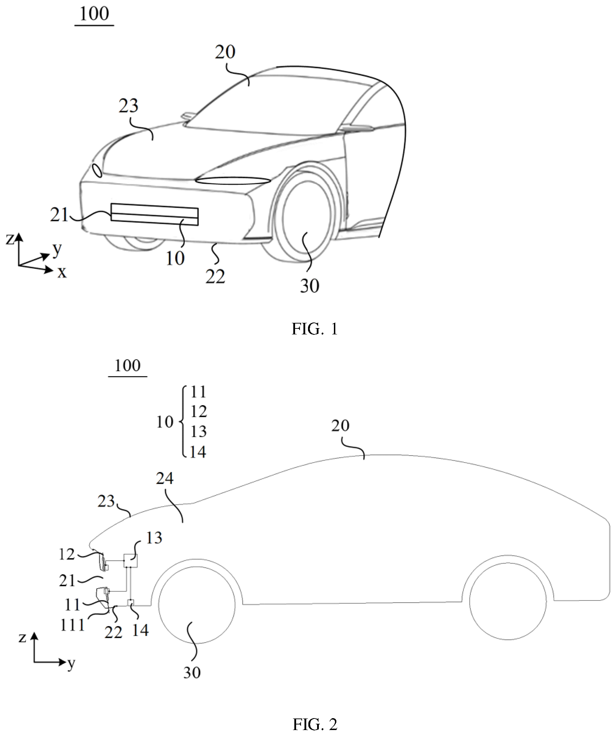

FIG. 1 is a schematic structural diagram of a vehicle according to an embodiment of the present application.

For convenience of description, in the embodiments of the present application, a height direction of a vehicle 100 is taken as a z-direction, a width direction of the vehicle 100 is taken as an x-direction, and a length direction of the vehicle 100 is taken as a y-direction. The height direction of the vehicle 100 is a vertical direction, an axial direction of the wheels 30 is the same as the width direction of the vehicle 100, and a direction from the front to the rear of the vehicle 100 is the length direction of the vehicle 100.

The embodiments of the present application provide a vehicle 100, as shown in FIG. 1, which may include a vehicle body 20 and wheels 30. The wheels 30 are provided at a vehicle body bottom 22 and used to support the vehicle body 20. An engine hood 23 is provided at a front of the vehicle body 20, an engine compartment 24 is provided below the engine hood 23 (as shown in FIG. 2), and an engine assembly of the vehicle 100 can be provided inside the engine compartment 24. A grille opening 21 is opened at a front end of the vehicle body 20, and the grille opening 21 is in communication with the engine compartment 24.

For example, as shown in FIG. 2, the engine compartment 24 is provided below the engine hood 23 of the vehicle body 20, the grille opening 21 can be provided at the front end of the vehicle body 20, and an inner side of the grille opening 21 can be provided with an active air intake grille assembly 10. The active air intake grille assembly 10 can block the grille opening 21 in some cases to prevent airflow from entering into the engine compartment 24 through the grille opening 21; and can also open the grille opening 21 in some cases to allow airflow to enter into the engine compartment 24 from the grille opening 21.

By providing a first structural member 11 between the grille opening 21 and the engine compartment 24, the first structural member 11 can be provided inside the vehicle body 20, thereby improving the aesthetic appearance of the vehicle body 20 and improving the user experience.

It should be noted that the active air intake grille assembly 10 can be used to block the grille opening 21, where when the active air intake grille assembly 10 completely blocks the grille opening 21 (as shown in FIG. 1), the grille opening 21 is in a closed state. At this point, the airflow can be blocked from entering into the engine compartment 24 through the grille opening 21, which can achieve the heat preservation effect of the engine, and then the engine can be rapidly heated, so as to improve engine efficiency, reduce exhaust emissions, and lower wind resistance, thereby achieving the purpose of saving fuel and reducing consumption.

When the active air intake grille assembly 10 partially blocks the grille opening 21, the grille opening 21 are in a partially closed state. At this point, part of the airflow may be blocked from entering into the engine compartment 24 through the grille opening 21, while part of the airflow may be allowed to enter the engine compartment 24 through the grille opening 21, which can achieve a certain heat dissipation effect on the engine and prevent an abnormality due to an excessively high temperature of engine, thereby protecting the engine.

When the active air intake grille assembly 10 does not block the grille opening 21, the grille opening 21 is in an open state (as shown in FIG. 2), so that the airflow can enter the engine compartment 24 from the grille opening 21, which can have a certain heat dissipation effect on the engine and prevent an abnormality due to an excessively high temperature of the engine, thereby protecting the engine. Furthermore, compared to the partially closed state of the grille opening 21, the heat dissipation efficiency will be higher.

In addition, the active air intake grille assembly 10 may also be used for the air dam of the vehicle 100. When the active air intake grille assembly 10 extends beyond the bottom of the vehicle body 20, the air dam 111 is in an open state, and at this time, the airflow can be blocked from passing through the bottom of the vehicle body 20. When the active air intake grille assembly 10 is located within the bottom of the vehicle body 20, the air dam 111 is in a closed state.

The active air intake grille assembly 10 provided in the embodiments of the present application will be described below with reference to the accompanying drawings.

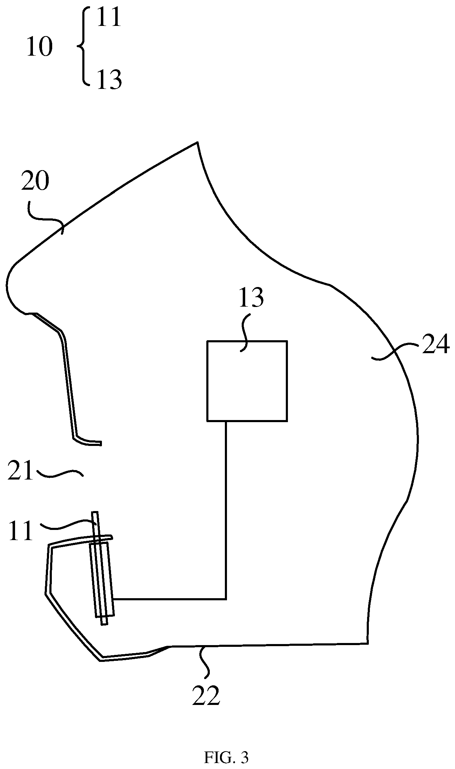

An embodiment of the present application provides an active air intake grille assembly 10, which is applied to a vehicle 100. As shown in FIG. 3, the active air intake grille assembly 10 may include a first structural member 11 and a controller 13. The first structural member 11 can be movably connected to the vehicle body 20 in a vertical direction, the controller 13 is connected to the first structural member 11, and the controller 13 is configured to control the first structural member 11 to move relative to the vehicle body 20 in the vertical direction. The first structural member 11 includes a first state and a second state. The first structural member 11 is configured to block airflow from entering into the vehicle body 20 through the grille opening 21 when it is in the first state; and the first structural member is further configured to block the airflow from passing through the vehicle body bottom 22 when it is in the second state.

It should be noted that, in the embodiments of the present application, the vertical direction refers to a height direction of the vehicle 100; and the vertical direction may be perpendicular to a horizontal plane, and may also form a certain angle with the horizontal plane. The first structural member 11 moving in the vertical direction relative to the vehicle body 20 refers to that the first structural member 11 can spatially move up and down. For example, when the first structural member 11 is obliquely provided relative to the horizontal plane, the first structural member 11 moving in the vertical direction relative to the vehicle body 20 refers to that the first structural member 11 moves up and down along its own inclination direction. The up and the down directions in the embodiments of the present application are the same as the up and down directions of the vehicle 100 respectively, where the top of the vehicle 100 is located at its upper position, and the wheels 30 of the vehicle 100 are located at its lower position.

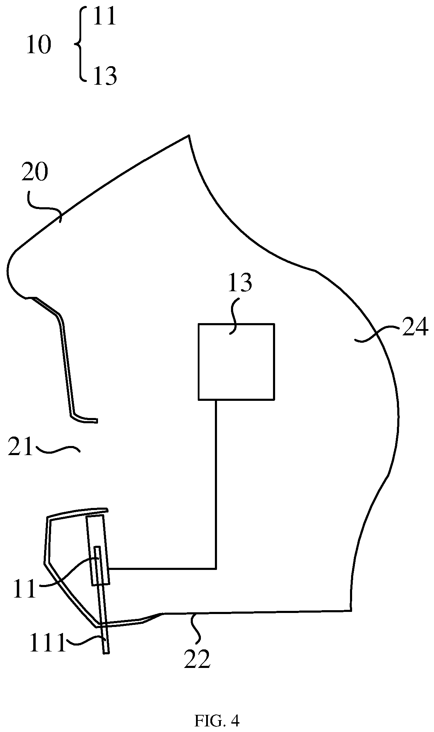

Exemplarily, as shown in FIG. 3, when the first structural member 11 is in the first state, at least part of a structure of the first structural member 11 is located within the grille opening 21 for blocking at least part of the grille opening 21. As shown in FIG. 4, when the first structural member 11 is in the second state, at least part of the structure of the first structural member 11 extends beyond the vehicle body bottom 22, and the air dam 111 is in the open state.

According to the active air intake grille assembly 10 in the embodiments of the present application, the first structural member 11 is set to move relative to the vehicle body 20 in the vertical direction, that is, the first structural member 11 can move up and down relative to the vehicle body 20; and when the first structural member 11 is in the first state, it can be used to block the airflow from entering into the vehicle body 20 through the grille opening 21, so that the partial structure of the first structural member 11 in the first state can function as an air intake grille, which blocks the airflow from entering into the interior of the vehicle body 20. This can achieve the heat preservation effect on the engine, and then allow the engine to be rapidly heated, so as to improve engine efficiency, reduce exhaust emissions, and lower wind resistance, thereby achieving the purpose of saving fuel and reducing consumption.

When the first structural member 11 is in the second state, it can be used to block the airflow from passing through the vehicle body bottom 22, so that the partial structure of the first structural member in the second state can serve as an air dam, so as to improve the dynamic performance and operability of the vehicle 100, increase the damping coefficient of the vehicle, or improve the stability of the vehicle 100 by generation of a downward force thereon.

That is to say, the first structural member 11 can be used not only as the air intake grille but also as the air dam, and is easy to control. Therefore, the active air intake grille assembly 10 in the embodiments of the present application has a simple structure, a small volume and a low cost, and can reduce installation space and facilitate assembly.

It should be noted that, when the first structural member 11 is in the first state, the grille opening 21 is in the partially closed state or the closed state, and at this point, the airflow can be blocked from entering into the vehicle body 20 from the grille opening 21. When the first component is in the second state, the air dam 111 is in the open state (as shown in FIG. 4), and the airflow can be blocked from passing through the bottom of the vehicle body 20.

When the first structural member 11 is in the first state, by positioning at least part of the structure of the first structural member 11 within the grille opening 21, it enables that the part of the first structural member 11 located within the grille opening 21 can block at least part of the grille opening 21, thereby enabling the first structural member 11 to achieve the function of blocking the airflow from entering into the vehicle body 20 through the grille opening 21. When the first structural member 11 is in the second state, by extending at least part of the structure of the first structural member 11 beyond the vehicle body bottom 22, it enables that the part of the first structural member 11 extending beyond the vehicle body bottom 22 can block the airflow at the bottom of the vehicle body 20, that is, the airflow is blocked from entering into the bottom of the vehicle body 20, so that an air pressure at the bottom of the vehicle body 20 is less than that outside the vehicle body 20, making a downforce of the vehicle body 20 greater, and improving the stability of the vehicle body 20.

It should be noted that, when the first structural member 11 is in the second state, a length of the first structural member 11 extending beyond the bottom of the vehicle body 20 is not limited, which can be specifically set according to a specific vehicle model, and is not further limited in the embodiments of the present application.

Exemplarily, the first structural member 11 may be a plate-like structure, and a size of the plate-like structure in the width direction of the vehicle 100 is greater than a size of the grille opening 21 in the width direction of the vehicle 100, so that when the plate-like structure is in the first state, at least part of the grille opening 21 can be blocked off.

Exemplarily, in the width direction of the vehicle 100, the first structural member 11 extends from a center to two ends of the grille opening 21, and the first structural member 11 is bilaterally symmetrical relative to a centerline of the grille opening 21. In this way, it can be ensured that in the width direction of the vehicle 100, the airflow entering the interior of the vehicle body 20 from the grille opening 21 is relatively uniform, thereby improving the stability of the vehicle 100 in the driving process.

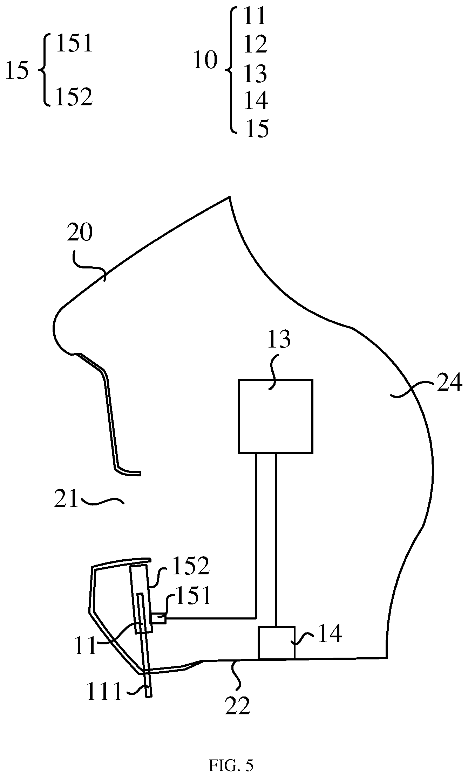

As shown in FIG. 5, in some embodiments, the active air intake grille assembly 10 may further include a monitoring apparatus 14. The monitoring apparatus 14 is electrically connected to the controller 13. The monitoring apparatus 14 is used to collect driving parameter information of the vehicle 100, and the controller 13 is used to control the movement of the first structural member 11 relative to the vehicle body 20 in the vertical direction based on the driving parameter information.

Exemplarily, the driving parameter information of the vehicle 100 may include a driving speed of the vehicle 100, a temperature of the engine of the vehicle 100, etc.; and the driving parameter information of the vehicle 100 is not further limited in the embodiments of the present application. In should be noted that, when the traveling speed of vehicle 100 is high, the temperature of the engine of vehicle 100 is also relatively high; and when the vehicle 100 is stationary or travels at a low speed, the temperature of the engine of the vehicle 100 is relatively low.

Exemplarily, the monitoring apparatus 14 may include a speed sensor and a temperature sensor, and in the embodiments of the present application, the specific structure of the monitoring apparatus 14 is not further limited.

It should be noted that, when the controller 13 controls the first structural member 11 to move in the vertical direction based on the driving parameter information of the vehicle 100, which is not limited to switching the first structural member 11 between the first state and the second state.

In some embodiments, the first structural member 11 may further include more states. For example, the first state of the first structural member 11 further includes a partial blocking state and a full blocking state. The first structural member 11 may also include an intermediate state, where when the first structural member 11 is in the intermediate state, it is located between the grille opening 21 and the vehicle body bottom 22, and at this time, the grille opening 21 is in an opened state and the air dam 111 is in a retracted state. The controller 13 may be used to switch the first structural member 11 among the partially closed state, the fully closed state, the intermediate state, and the second state based on the driving parameter information of the vehicle 100.

It should be noted that, as shown in FIG. 5, the air dam 111 is a part of the structure of the first structural member 11; and when the first structural member 11 extends beyond the bottom of the vehicle body 20, the part of the first structural member 11 extending beyond the bottom of the vehicle body 20 is the air dam 111.

Some examples in which the controller 13 controls the first structural member 11 based on the driving parameter information of the vehicle 100 will be specifically described below.

In some embodiments, the controller 13 controls the first structural member 11 to be in the second state when a driving speed of the vehicle 100 is greater than a first preset threshold. At this time, it can be determined that the air dam 111 is in an opened state, and the part of the first structural member 11 extending beyond the bottom of the vehicle body can block the airflow from passing through the vehicle body bottom 22, so that an extension pressure at the bottom of the vehicle body 20 is less than that outside of the vehicle body 20, thereby increasing the pressure of the vehicle body 20, improving the grip effect of the vehicle 100, and further improving the driving stability of the vehicle 100.

Exemplarily, the first preset threshold may be any value ranging from 120 km/h to 160 km/h.

When the driving speed of the vehicle 100 is less than the first preset threshold value, the air dam 111 is not required to increase the grip force of the vehicle 100, so that the first structural member 11 can be adjusted to a state other than the second state. That is, the first structural member 11 can be adjusted to any state as long as it does not extend beyond the bottom of the vehicle body 20. Exemplarily, the first structural member 11 can be adjusted to the first state, or the intermediate state, which is not further limited in the embodiments of the present application.

Exemplarily, when the temperature of the engine of the vehicle 100 is less than a second preset threshold value, it is not required for the engine to dissipate heat, and at this time, the controller 13 may control the first structural member 11 to be in the first state. It should be noted that, when the first structural member 11 is in the first state, the grille opening 21 is in the partially closed state or the closed state. That is to say, when the temperature is relatively low, the grille opening 21 can be closed or partially closed, so as to achieve the heat preservation effect of the engine.

When the temperature of the engine of the vehicle 100 is greater than the second preset threshold value, the engine needs to dissipate heat, and the controller 13 can control the first structural member 11 to partially block or completely open the grille opening 21, thereby improving the heat dissipation effect of the engine.

It should be noted that, in the embodiments of the present application, a specific manner for the controller 13 to control the first structural member 11 to move relative to the vehicle body 20 in the vertical direction based on the driving parameter information is not further limited. In addition, the specific values of the first preset threshold and the second preset threshold are not further limited.

By providing the monitoring apparatus 14, the controller 13 can control the movement of the first structural member 11 through the driving parameter information of the vehicle 100 collected by the monitoring apparatus 14. That is to say, the controller 13 may control the movement direction of the first structural member 11 based on the driving parameter information of the vehicle 100 collected by the monitoring apparatus 14. For example, when the first structural member 11 is required to achieve the function of an air intake grille, the first structural member 11 may be controlled to move upward to block the grille opening 21. When the first structural member 11 is required to achieve the function of an air dam, the first structural member 11 may be controlled to move downward, so that part of the structure of the first structural member 11 extends beyond of the bottom of the vehicle body 20, thereby blocking the airflow from entering into the bottom of the vehicle body 20.

Continuing to refer to FIG. 5, the active air intake grille assembly 10 provided in the embodiments of the present application may further include a driving assembly 15, where the first structural member 11 is connected to the driving assembly 15. The driving assembly 15 is electrically connected to the controller 13, and the controller 13 is configured to control the driving assembly 15 to drive the first structural member 11 to move in the vertical direction relative to the vehicle body 20.

By providing the driving assembly 15, a driving force is provided for the movement of the first structural member 11, so as to drive the first structural member 11 to move in the vertical direction. By electrically connecting the controller 13 to the driving assembly 15, the driving assembly 15 can be further controlled by the controller 13.

Exemplarily, the driving assembly 15 includes a guide rail 152 and an actuator 151, where the first structural member 11 is movably connected to the guide rail 152, and the actuator 151 is configured to drive the first structural member 11 to move along the guide rail 152 in the vertical direction.

By providing the driving assembly 15 with the guide rail 152 and the actuator 151, the first structural member 11 can be movably connected to the guide rail 152. In this way, when the first structural member 11 moves in the vertical direction, it can move along the guide rail 152, which can prevent the first structural member 11 from shaking when it moves in the vertical direction, thereby improving the stability of the first structural member 11 during movement. By providing the actuator 151, it is possible to provide a driving force for the movement of the first structural member 11.

Exemplarily, the guide rail 152 may be a groove structure, and a protrusion structure that matches the groove structure may be provided on the first structural member 11. When the first structural member 11 and the guide rail 152 are assembled, the protrusion structure and the groove structure can be connected in a cooperation manner, so that the first structural member 11 can move along the guide rail 152 in the vertical direction.

It should be noted that, the shape of the guide rail 152 includes, but is not limited to, the groove structure mentioned above. In some other embodiments, the guide rail 152 may also have other structures. In addition, the number of the guide rails 152 may be one, two, three or more, where when there are a plurality of guide rails 152, the plurality of guide rails 152 can be spaced apart in the x-direction, so that the stability of the first structural member 11 during movement can be improved. In the embodiments of the present application, the specific shape and number of the guide rails 152 are not further limited.

Exemplarily, the actuator 151 may be an electric motor. Of course, in other embodiments, the actuator 151 may also be a link mechanism, an air cylinder, etc. In the embodiments of the present application, the specific structure of the actuator 151 is not further limited.

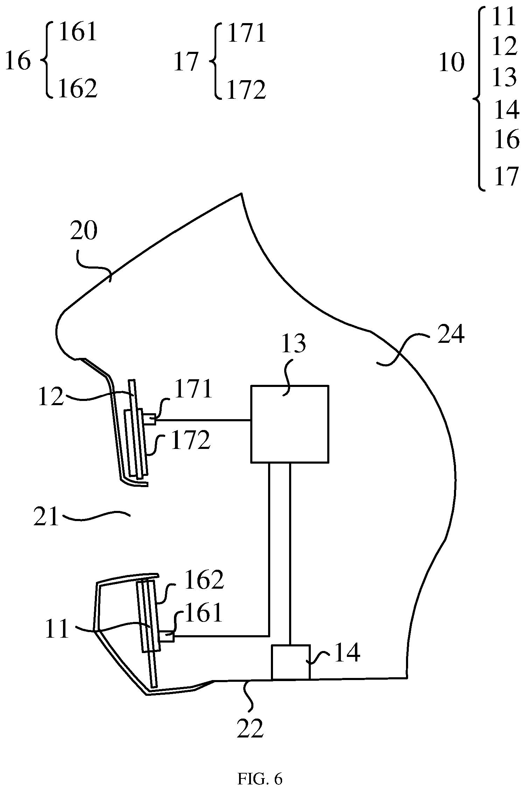

In some other embodiments, as shown in FIG. 6, the active air intake grille assembly 10 further includes a second structural member 12, where in the vertical direction, the first structural member 11 and the second structural member 12 are provided opposite to each other on both sides of the grille opening 21, the first structural member 11 is located between the grille opening 21 and the bottom of the vehicle body 20, and the second structural member 12 is located between the grille opening 21 and a top of the vehicle body 20.

By providing the second structural member 12 and arranging the first structural member 11 and the second structural member 12 opposite to each other on both sides of the grille opening 21, the opening or closing of the grille opening 21 can be controlled by the first structural member 11 and the second structural member 12 jointly. Compared to that the opening or closing of the grille opening 21 is controlled only by the first structural member 11, the flexibility of controlling the grille opening 21 can be improved.

Exemplarily, the second structural member 12 may be a plate-like structure, and a size of the plate-like structure in the width direction of the vehicle 100 is greater than a size of the grille opening 21 in the width direction of the vehicle 100, so that when the plate-like structure is in the first state, at least part of the grille opening 21 can be blocked off.

In some embodiments, a surface of the first structural member 11 and a surface the second structural member 12 that are opposite to each other can be set as a flat surface, arc surface, serrated surface, etc. In the embodiments of the present application, the specific structures of the first structural member 11 and the second structural member 12 are not further limited.

Exemplarily, the second structural member 12 is connected to the controller 13, and the controller 13 is configured to control the second structural member 12 to move in the vertical direction relative to the vehicle body 20. By connecting the second structural member 12 with the controller 13, the controller 13 can control the second structural member 12 to move in the vertical direction.

Continuing to refer to FIG. 6, the active air intake grille assembly 10 may also include a first driving assembly 16 and a second driving assembly 17. The first structural member 11 is connected to the first driving assembly 16, and the second structural member 12 is connected to the second driving assembly 17. The first driving assembly 16 and the second driving assembly 17 are both electrically connected to the controller 13, and the controller 13 is configured to control the first driving assembly 16 to drive the first structural member 11 to move in the vertical direction relative to the vehicle body 20. The controller 13 is further configured to control the second driving assembly 17 to drive the second structural member 12 to move in the vertical direction relative to the vehicle body 20.

By providing the first driving assembly 16 and the second driving assembly 17, a driving force is provided for the movement of the first structural member 11 and the second structural member 12, so as to drive the first structural member 11 and the second structural member 12 to move in the vertical direction. By electrically connecting the controller 13 with both the first driving member and the second driving member 17, the first driving member and the second driving member 17 can be controlled by the controller 13.

Exemplarily, the first driving assembly 16 includes a first guide rail 162 and a first actuator 161, and the second driving assembly 17 includes a second guide rail 172 and a second actuator 171. The first structural member 11 is movably connected to the first guide rail 162, and the first actuator 161 is configured to drive the first structural member 11 to move along the first guide rail 162 in the vertical direction. The second structural member 12 is movably connected to the second guide rail 172, and the second actuator 171 is configured to drive the second structural member 12 to move along the second guide rail 172 in the vertical direction.

By providing the first driving assembly 16 with the first guide rail 162 and the first actuator 162, the first structural member 11 can be movably connected to the first guide rail 162, so that when the first structural member 11 moves in the vertical direction, it can move along the first guide rail 162, which can prevent the first structural member 11 from shaking when it moves in the vertical direction, thereby improving the stability of the first structural member 11 during movement. By providing the first actuator 161, it is possible to provide a driving force for the movement of the first structural member 11.

By providing the second driving assembly 17 with the second guide rail 172 and the second actuator 171, the second structural member 12 can be movably connected to the second guide rail 172, so that when the second structural member 12 moves in the vertical direction, it can move along the second guide rail 172, which can prevent the second structural member 12 from shaking when it moves in the vertical direction, thereby improving the stability of the second structural member 12 during movement. By providing the second actuator 171, it is possible to provide a driving force for the movement of the second structural member 12.

In one possible implementation, both the first actuator 161 and the second actuator 171 are electric motors. Of course, in other embodiments, the first actuator 161 and the second actuator 171 may also be a link mechanism, an air cylinder, etc. In the embodiments of the present application, the specific structure of the actuator 151 is not further limited.

It should be noted that the structures and principles of the first driving assembly 16 and the second driving assembly 17 in the embodiments of the present application are the same as those of the driving assembly 15 in the embodiment shown in FIG. 5. Therefore, in the embodiments of the present application, for the specific structures of the first driving assembly 16 and the second driving assembly 17, reference may be made to the description of the driving assembly 15 in the embodiment shown in FIG. 5, which will not repeated in the embodiments of the present application.

Exemplarily, in the embodiments of the present application, the active air intake grille assembly 10 can further include a monitoring apparatus 14. The monitoring apparatus 14 is electrically connected to the controller 13, and is configured to collect the driving parameter information of the vehicle 100. The controller 13 is configured to control the first structural member 11 and the second structural member 12 to move in the vertical direction relative to the vehicle body 20 based on the driving parameter information.

Exemplarily, the driving parameter information of the vehicle 100 may include a driving speed of the vehicle 100, a temperature of the engine of the vehicle 100, etc.; and the driving parameter information of the vehicle 100 is not further limited in the embodiments of the present application.

In some embodiments, the second structural member 12 may include a third state and a fourth state, where when the second structural member 12 is in the third state, at least part of a structure of the second structural member 12 is located within the grille opening 21 and is used to block at least part of the grille opening 21, so as to block an airflow from entering into the vehicle body 20 through the grille opening 21. When the second structural member 12 is in the fourth state, the second structural member 12 is located outside the grille opening 21.

When the second structural member 12 is in the third state, by positioning at least part of the second structural member 12 within the grille opening 21, the part of the second structural member 12 located within the grille opening can be used to block the airflow from entering into the vehicle body 20 through the grille opening 21, so that the partial structure of the second structural member 12 in the third state can serve as an air intake grille, which can block the airflow from entering into the interior of the vehicle body 20. This can achieve the heat preservation effect of the engine, and then the engine can be rapidly heated, so as to improve engine efficiency, reduce exhaust emissions, and lower wind resistance, thereby achieving the purpose of saving fuel and reducing consumption. When the second structural member 12 is in the fourth state, the second structural member 12 is provided outside the grille opening 21, so that the grille opening 21 can be opened, which facilitates heat dissipation of the engine of the vehicle 100.

It should be noted that, when the controller 13 controls the first structural member 11 and the second structural member 12 to move in the vertical direction based on the driving parameter information of the vehicle 100, it is not limited to switching the first structural member 11 between the first state and the second state, and switching the second structural member 12 between the third state and the fourth state.

In some embodiments, the first structural member 11 may further include more states. For example, the first state of the first structural member 11 further includes a partial blocking state and a full blocking state. The first structural member 11 may also include an intermediate state, where when the first structural member 11 is in the intermediate state, it is located between the grille opening 21 and the vehicle body bottom 22; and at this time, the grille opening 21 is in an opened state, and the air dam 111 is in a retracted state. The controller 13 may be used to switch the first structural member 11 among the partial blocking state, the full blocking state, the intermediate state, and the second state based on the driving parameter information of the vehicle 100.

It should be noted that, when the second structural member 12 is in the third state, the grille opening 21 is in the partially closed state or the closed state. When the second structural member 12 is in the fourth state, the second structural member 12 does not block the grille opening 21. Since the state of the first structural member 11 cannot be determined, the grille opening 21 can be in the partially closed state, the closed state or the opened state.

An example of the controller 13 controlling the first structural member 11 and the second structural member 12 based on the driving parameter information of the vehicle 100 is described below with reference to the accompanying drawings.

As shown in FIG. 6, the grille opening 21 is in the opened state, and the air dam 111 is in the retracted state. At this time, the first structural member 11 is in the intermediate state, and the second structural member 12 is in the fourth state.

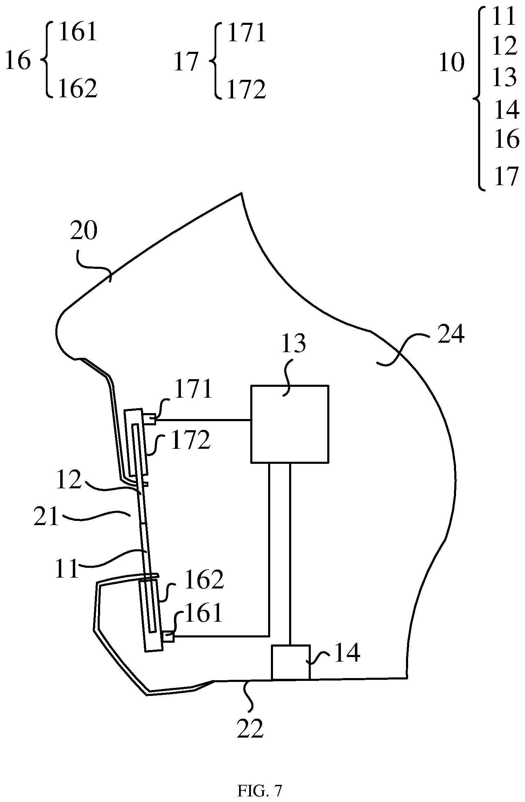

As shown in FIG. 7, the grille opening 21 is in the closed state, and the air dam 111 is in the retracted state. At this time, the first structural member 11 is in the first state, and the second structural member 12 is in the third state. In addition, the first structural member 11 blocks one part of grille opening 21, and the second structural member 12 blocks the other part of grille opening 21.

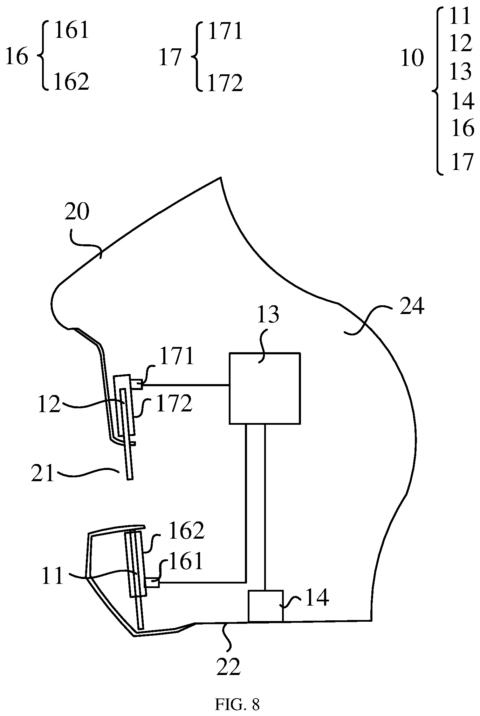

As shown in FIG. 8, the grille opening 21 is in the partially closed state, and the air dam 111 is in the retracted state. At this time, the first structural member 11 is in the intermediate state, the second structural member 12 is in the third state, and the second structural member 12 partially blocks the grille opening 21.

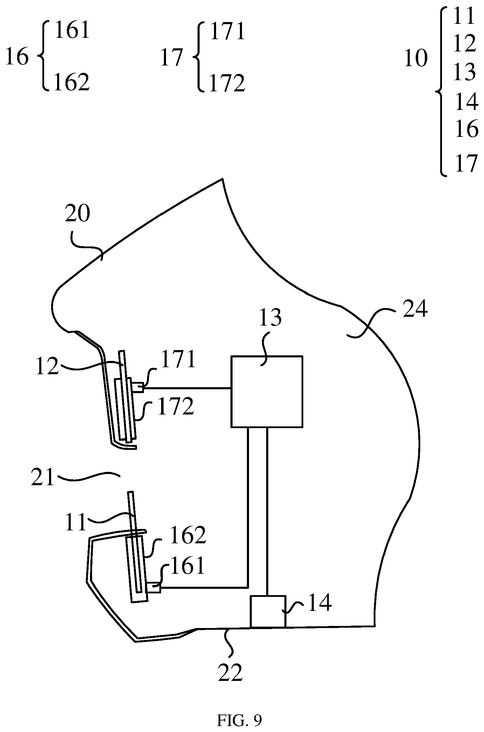

As shown in FIG. 9, the grille opening 21 is in the partially closed state, and the air dam 111 is in the retracted state. At this time, the first structural member 11 is in the first state, the second structural member 12 is in the fourth state, and the first structural member 11 partially blocks the grille opening 21.

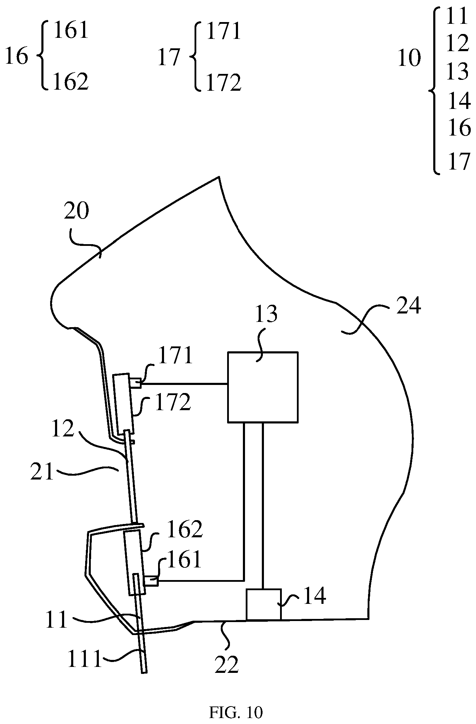

As shown in FIG. 10, the grille opening 21 is in the closed state, and the air dam 111 is in the opened state. At this time, the first structural member 11 is in the second state, the second structural member 12 is in the third state, and the second structural member 12 completely blocks the grille opening 21.

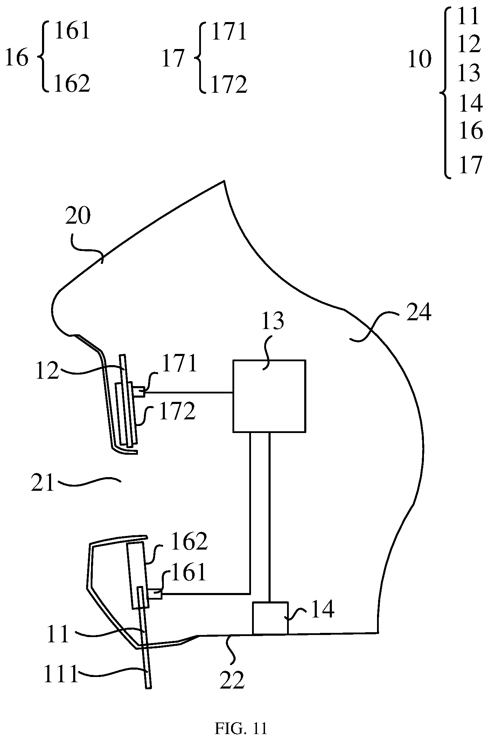

As shown in FIG. 11, the grille opening 21 is in the opened state, the air dam 111 is in the opened state, the first structural member 11 is in the second state, and the second structural member 12 is in the fourth state.

Exemplarily, when the driving speed of the vehicle 100 is greater than the first preset threshold value, the temperature of the engine of vehicle 100 is relatively high. According to the requirement for the heat dissipation amount of the cooling system of the vehicle 100, the controller 13 may control the first structural member 11 and the second structural member 12 to move in the vertical direction to the position in FIG. 6, FIG. 8, FIG. 9 or FIG. 11.

For example, when the driving speed of the vehicle 100 is less than the first preset threshold value, the temperature of the engine of vehicle 100 is low; or when the vehicle 100 starts at an extremely low temperature, an electric vehicle usually needs to use the positive temperature coefficient (positive temperature coefficient, PTC) or heat pump of an air conditioner to preheat the battery, and for a fuel vehicle or a hybrid vehicle 100, it is also necessary to rapidly raise the temperature of the engine to preheat and lubricate a power system. The vehicle 100 has no heat dissipation requirement and needs thermal insulation measures, so that in these cases, the first structural member 11 and the second structural member 12 can be controlled by the controller 13 to move in the vertical direction to the position shown in FIG. 7 or FIG. 10.

For example, when the driving speed of the vehicle 100 is less than the first preset threshold value, there is no need for a large downforce to stabilize the grip force of the front axle of the vehicle 100. At this time, the air dam 111 may be in the retracted state, and the controller 13 may control the first structural member 11 and the second structural member 12 to move to the position shown in FIG. 6, 7, 8 or 9. The positions of the first structural member 11 and the second structural member 12 can also be specifically selected in accordance with the temperature of the engine.

When the driving speed of the vehicle 100 is greater than the first preset threshold, a larger downforce is required for the entire vehicle to obtain additional tire grip fore. At this time, the controller 13 can make the first structural member 11 and the second structural member 12 move to the positions in FIGS. 10 and 11, and the height of the first structural member 11 extending beyond the bottom of the vehicle body 20 can be adjusted based on the driving speed of the vehicle 100, thereby obtaining different values of the downforce of the front axle.

It should be noted that, in the embodiments of the present application, the control of the height of the first structural member 11 extending beyond the bottom of the vehicle body 20 is not further limited.

It should be noted that, in some embodiments, the first structural member 11 and the second structural member 12 can also be manually controlled to move in the vertical direction according to the requirements of the user. The control methods for the first structural member 11 and the second structural member 12 are not further limited in the embodiments of the present application.

The vehicle 100 in the embodiments of the present application is provided with the above-mentioned active air intake grille assembly 10. Since the active air intake grille assembly 10 has a simple structure, a small volume and a low cost, which can reduce installation space and facilitate assembly, thereby reducing the assembly difficulty of the active air intake grille and reducing the cost of the vehicle 100.

It should be noted that, the vehicle in the embodiments of the present application may be a small domestic car, or may be a middle-to-large car, a passenger car, etc. In the embodiment of the present application, the type of the vehicle is not further limited.

In the description of the present application, it should be understood that the orientation or position relationships indicated by the terms "center", "longitudinal", "lateral", "length", "width", "thickness", "above", "below", "front", "rear", "left", "right", "vertical", "horizontal", "top", "bottom", "inside", "outside", etc. are based on the orientation or position relationships shown in the accompanying drawings, only for the convenience of describing the present application and simplifying the description, rather than indicating or implying that the indicated device or element must have a specific orientation, and be constructed and operated in a specific orientation. Therefore, it cannot be understood that the present application is limited thereto.

In the description of the present application, it should be understood that the terms "include", "comprise", and any other variant thereof are intended to cover a non-exclusive inclusion. For example, a process, a method, an article, or a device which includes a series of steps or units is not necessarily limited to those steps or units clearly listed, but also may include other steps or units that are not explicitly listed or inherent to the process, the method, the article, or the device.

Unless otherwise specified or limited, the terms "mount", "connect", "attach" and "fix" and the like should be understood in a broader sense, for example, it may be fixed connection, detachable connection, or integrated into a whole; or it may be mechanical connection; or it may be direct connection or indirect connection through an intermediate medium; or it may be inner communication of two elements or interaction relationship between two elements. For those ordinary skilled in the art, the specific meanings of the above terms in the present application can be understood based on specific circumstances. In addition, the terms such as "first" and "second" are only used for description, and cannot be understood as indicating or implying relative importance or implicitly indicating the quantity of the indicated technical features.

Finally, it should be noted that the above embodiments are merely used to illustrate the technical solutions of the present application rather than limiting the present application. Although the present application has been described in detail with reference to the above embodiments, those ordinary skilled in the art should understand that they may still make modifications to the technical solutions described in the above embodiments, or make equivalent replacements to some or all technical features thereof. These modifications or replacements do not make the essence of the corresponding technical solutions depart from the scope of the technical solutions in the embodiments of the present application.

## Claims

1. An active air intake grille assembly applied to a vehicle, wherein the vehicle comprises a vehicle body and a grille opening provided on the vehicle body ;
the active air intake grille assembly comprises a first structural member and a controller, wherein
first structural member is movably connected to the vehicle body in a vertical direction, the controller is connected to the first structural member, and the controller is configured to control the first structural member to move relative to the vehicle body in the vertical direction;
the first structural member comprises a first state and a second state; and
the first structural member is configured to block airflow from entering into the vehicle body through the grille opening when it is in the first state; and the first structural member is further configured to block the airflow from passing through a bottom of the vehicle body when it is in the second state.

2. The active air intake grille assembly according to claim 1, wherein
when the first structural member is in the first state, at least part of a structure of the first structural member is located within the grille opening and configured to block at least part of the grille opening; and
when the first structural member is in the second state, at least part of the structure of the first structural member extends beyond the bottom of the vehicle body.

3. The active air intake grille assembly according to claim 2, further comprising a monitoring apparatus, wherein
the monitoring apparatus is electrically connected to the controller and is configured to collect driving parameter information of the vehicle, and the controller is configured to control the first structural member to move relative to the vehicle body in the vertical direction based on the driving parameter information.

4. The active air intake grille assembly according to any one of claims 1-3, further comprising a driving assembly, wherein
the first structural member is connected to the driving assembly;
the driving assembly is electrically connected to the controller, and the controller is configured to control the driving assembly to drive the first structural member to move relative to the vehicle body in the vertical direction.

5. The active air intake grille assembly according to claim 4, wherein the driving assembly comprises a guide rail and an actuator, wherein
the first structural member is movably connected to the guide rail, and the actuator is configured to drive the first structural member to move along the guide rail in the vertical direction.

6. The active air intake grille assembly according to any one of claims 1-3, further comprising a second structural member, wherein
in the vertical direction, the first structural member and the second structural member are provided opposite to each other on both sides of the grille opening, the first structural member is located between the grille opening and the bottom of the vehicle body, and the second structural member is located between the grille opening and a top of the vehicle body;
the second structural member is movably connected to the vehicle body in the vertical direction.

7. The active air intake grille assembly according to claim 6, wherein the second structural member is connected to the controller, and the controller is configured to control the second structural member to move relative to the vehicle body in the vertical direction.

8. The active air intake grille assembly according to claim 7, wherein the second structural member comprises a third state and a fourth state, wherein
when the second structural member is in the third state, at least part of a structure of the second structural member is located within the grille opening for blocking at least part of the grille opening, so as to block the airflow from entering into the vehicle body through the grille opening; and
when the second structural member is in the fourth state, the second structural member is located outside the grille opening.

9. The active air intake grille assembly according to claim 7 or 8, further comprising a first driving assembly and a second driving assembly, wherein
the first structural member is connected to the first driving assembly,
the second structural member is connected to the second driving assembly;
both the first driving assembly and the second driving assembly are electrically connected to the controller, and the controller is configured to control the first driving assembly to drive the first structural member to move in the vertical direction relative to the vehicle body; and
the controller is further configured to control the second driving assembly to drive the second structural member to move in the vertical direction relative to the vehicle body.

10. The active air intake grille assembly according to claim 9, wherein the first driving assembly comprises a first guide rail and a first actuator, and the second driving assembly comprises a second guide rail and a second actuator, wherein
the first structural member is movably connected to the first guide rail, and the first actuator is configured to drive the first structural member to move along the first guide rail in the vertical direction; and
the second structural member is movably connected to the second guide rail, and the second actuator is configured to drive the second structural member to move along the second guide rail in the vertical direction.

11. A vehicle, comprising a vehicle body and the active air intake grille assembly according to any one of claims 1-10.

12. The vehicle according to claim 11, wherein the vehicle body comprises a grille opening and an engine compartment, and the grille opening is in communication with the engine compartment; and
the active air intake grille assembly comprises a first structural member located between the grille opening and the engine compartment.
